(19) Europäisches Patentamt
European Patent Office
Office européen des brevets

(11) Veröffentlichungsnummer: **0 090 367**
**B1**

(12) # EUROPÄISCHE PATENTSCHRIFT

(45) Veröffentlichungstag der Patentschrift: **18.05.88**

(51) Int. Cl.⁴: **B 01 D 53/34**

(21) Anmeldenummer: **83102977.2**

(22) Anmeldetag: **25.03.83**

(54) **Verfahren zur örtlichen und weiträumigen Beeinflussung von chemischen und/oder physikalischen Reaktionen in der Atmosphäre.**

(30) Priorität: **27.03.82 DE 3211423**

(43) Veröffentlichungstag der Anmeldung: **05.10.83 Patentblatt 83/40**

(45) Bekanntmachung des Hinweises auf die Patenterteilung: **18.05.88 Patentblatt 88/20**

(84) Benannte Vertragsstaaten: **AT BE CH DE FR GB IT LI LU NL SE**

(56) Entgegenhaltungen:
**DE-A-2 548 576**
**DE-A-3 006 198**
**DE-A-3 027 910**
**DE-B-2 147 685**
**DE-C-93 149**
**DE-C-264 294**
**FR-B-2 285 169**
**GB-A-826 221**
**US-A-3 071 433**

(73) Patentinhaber: **Karrena GmbH, Rüdigerstrasse 20, D-4000 Düsseldorf 30 (DE)**

(72) Erfinder: **Gerking, Erich, Dipl.- Ing., Rosenbuschweg 16, D-3000 Hannover 91 (DE)**

(74) Vertreter: **Cohausz, Helge B., Cohausz & Florack Schumannstrasse 97, D-4000 Düsseldorf 1 (DE)**

**EP 0 090 367 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Verfahren zur weiträumigen Beeinflussung von Schadstoffen in der Atmosphäre.

In dicht besiedelten Gebieten vor allem in Industriegebieten treten besonders stark Rauchgasemissionen auf, die säurebildende Bestandteile, insbesondere Schwefeldioxid und Stickoxid enthalten. Diese Bestandteile sind auch bei geringerer Konzentration als Schadstoffe anzusehen, denn sie sind die Ursache dafür, daß in Verbindung mit der in der Atmospähre enthaltenen Feuchtigkeit Säuren entstehen können. Die gerade in größerer Entfernung von den Rauchgasquellen auftretenden und mit dem sogenannten "sauren Regen" verbundenen Probleme sind bekannt. Dasselbe gilt in bezug auf die Schäden, die durch "trockene Ablagerung" von Säurebildnern, insbesondere an Pflanzen und kulturhistorischen Bauwerken entstehen. Ferner bewirken die sauren Bestandteile des Rauchgases selbst Schäden an den Atmungsorganen von Mensch, Tier und Pflanze, sofern die Gaskonzentrationen in der Luft zu hoch sind.

Eine systematische und insbesondere auch weiträumige Entlastung der Atmosphäre ist mit den bisher bekannten Maßnahmen nicht möglich. So ist man beispielsweise in Ermangelung besserer Möglichkeiten seit einiger Zeit bestrebt, das Eintreten von Schadstoffen in die Atmosphäre dadurch zu verhindern, daß großtechnische Anlagen mit geeigneten Filteranlagen, inbesondere mit Rauchgasentschwefelungsanlagen oder dergleichen, versehen werden. Es sollen also die Schadstoffe gar nicht erst in die Atmosphäre gelangen.

Die zur Entziehung des Schwefeldioxids dienenden Rauchgasentschwefelungsanlagen erfordern einen überaus hohen technischen und wirtschaftlichen Aufwand. Für kleinere technische Anlagen und für die Vielzahl von Einzel-Emittenten kann ein derartiger Aufwand aus wirtschaftlichen Gründen nicht in Kauf genommen werden. Dies wäre aber besonders wichtig, denn die obengenannten großtechnischen Anlagen haben am Schadstoffgehalt der Atmosphäre nur einen Anteil von etwa 25 %. Trotz des nur diesen verhältnismäßig kleinen Anteil betreffenden großen Aufwandes läßt sich also die Atmosphäre praktisch nur zu einem verhältnismäßig geringen Anteil vor Ubersäuerung schützen. Es kommt hinzu, daß oft bis zu 50 % der in der Atmosphäre enthaltenen Schadstoffe aus weit entfernten räumlichen Bereichen durch die atmosphärischen Strömungen herangetrieben wird. Hierdurch wird der durch Rauchgasentschwefelungsanlagen erzielbare Effekt weiter herabgesetzt.

Die Smog-Entwicklung findet insbesondere in räumlich begrenzten Ballungsbereichen statt und ist zu einem wesentlichen Teil auf die von Kraftfahrzeugen ausgestoßenen Abgase zurückzuführen. Man hat versucht, den Schadstoffanteil in den Abgasen zu reduzieren. Die hierbei bisher erreichten Verbesserungen sind jedoch zu gering, um einer Smog-Entwicklung entscheidend entgegenzutreten. In ähnlicher Weise führten auch andere Versuche, Schadstoffemissionen entgegenzuwirken, allenfalls nur zu einem begrenzten Erfolg, weil die Anzahl kleinerer und kleinster Schadstoffquellen zu groß und weil die Möglichkeiten für eine Verringerung der Emissionen zu klein sind, um eine ausreichende Herabsetzung der Gesamtemission an Schadstoffen zu gewährleisten. In smoggefährdeten Gebieten sah man sich deshalb gezwungen, bei ungünstigen Wetterlagen einschneidende Emissionsbegrenzungen zu verordnen. Dies stellt jedoch nur eine Notmaßnahme dar, die für eine verhältnismäßig kurze Zeit getroffen werden kann. Es haben jedoch die für den Austritt der Schadstoffe ursächlichen zahlreichen kleineren Quellen einschließlich der Kraftfahrzeuge an der Gesamt-Schadstoffemission einen Anteil, der vielfach zwischen 25 % und 75 % liegen kann und der deshalb durchaus als wesentlich anzusehen ist. Auch Smog, der aus weiter entfernt liegenden Gebieten durch atmosphärische Strömungen herangetrieben wird, läßt sich bisher noch nicht wirksam bekämpfen.

Man hat ferner bereits versucht, in der Atmosphäre stattfindende Reaktionen dadurch zu beeinflussen, daß von einem Flugzeug aus geeignete Wirkstoffe in der Atmosphäre verteilt werden. Man hat zur künstlichen Erzeugung von Regen aus einem Flugzeug heraus Silberjodid verbreitet. Ein derartiges Verfahren ist aber ebenfalls sehr aufwendig und vor allem nur für einen verhältnismäßig kleinen räumlichen Bereich praktisch durchführbar.

Aus der DE-A-3 006 198 ist es bekannt, zur Verhinderung von Smog in Rauchgase Ammoniak einzubringen, insbesondere durch Abregnung aus einem Flugzeug. Es handelt sich hier um ein Fällungsverfahren, das nur örtlich begrenzt wirkt. Ein Fällungsverfahren ist auch aus der US-A-2 991 014 bekannt. Hier werden zum Erzeugen von Regen Füllungsmittel wie Ammonium in die Atmosphäre gebracht. Es handelt sich somit nicht um eine überregionale Einwirkung auf die Luftschichten, sondern lediglich um eine Problembeseitigung im Nahbereich. Zum "Regenmachen" sind dabei Wirkstoffkonzentrationen erforderlich, die wesentlich über denen dieser Anmeldung liegen.

Es ist Aufgabe der vorliegenden Erfindung, ein zum Beeinflussen von chemischen und/oder physikalischen Reaktionen in der Atmosphäre geeignetes und mit wirtschaftlich noch vertretbaren Mitteln durchführbares Verfahren zu schaffen, mit dem sich die in der Atmosphäre stattfindenden Reaktionen systematisch global beeinflussen lassen.

Zur Lösung dieser Aufgabe wird erfindungsgemäß ein Verfahren vorgeschlagen zur Herabsetzung der schädlichen Wirkung der in

der Atmosphäre enthaltenen säurebildenden Schadstoffe wie $SO_2$ und $NO_x$ unter Mitwirkung der in der Atmosphäre enthaltenen Feuchtigkeit, durch systematische und weiträumige Einbringung und Verteilung von stark wasserlöslichen, nicht staubbildenden Basenbildnern wie Ammoniak-, Kalium- und Natriumverbindungen in die Atmosphäre,

über ein System von überregional angeordneten Schornsteinen und/oder Bauwerken zur Herbeiführung in etwa gleicher Einwirkungsbereiche der Säure und Basenbildner in den Luftschichten.

Die Erfindung ermöglicht erstmalig einen systematischen Schutz sehr weitreichender Gebiete, beispielsweise eines Kontinents oder eines großen Teils desselben. Der Schutz braucht sich nicht nur auf zur Zeit bereits bekannte schädliche Auswirkungen zu erstrecken. Auch eventuell zukünftig noch festgestellte schädliche Auswirkungen werden mit Hilfe des von der Erfindung vorgeschlagenen Verfahrens bekämpft werden können. Es werden in den zu schützenden Gebieten, in denen unerwünscht hohe schädliche Auswirkungen im allgemeinen zu erwarten sind, systematisch Bauwerke mit Kaminfunktion errichtet, wobei sich bereits vorhandene hohe Bauwerke wie Schornsteine, Kühltürme oder dergleichen in dieses System vorteilhaft einbeziehen lassen. Mit Hilfe des Systems ist man in der Lage, dem jeweils in der Atmosphäre festgestellten Schadstoffgehalt entgegenzuwirken, und zwar sogar unabhängig davon, ob die Schadstoffe aus dem betreffenden Gebiet selbst oder aber aus einem weiter entfernten Gebiet stammen, aus dem sie durch die atmosphärischen Strömungen herangeführt worden sind.

Die Anzahl der für ein derartiges System erforderlichen Schornsteine und/oder kaminähnlichen Bauwerke richtet sich unter anderem nach der Größe des zu schützenden Gebietes und der in der Atmosphäre einzuleitenden Wirkstoffmenge. Gegebenenfalls können sogar nur wenige Schornsteine oder Bauwerke mit Kaminfunktion für die Bildung eines solchen Systems ausreichend sein.

Auch ist die Höhe der in das System einbezogenen Schornsteine und kaminähnlichen Bauwerke von Bedeutung. Wenn diese Höhe groß ist und beispielsweise 300 - 400 m beträgt, können atmosphärische Sperrschichten durchstoßen werden.

Im Rahmen der Anwendung des erfindungsgemäßen Verfahrens benötigt man Informationen über die Art und den Konzentrationsgrad der jeweils in der Atmosphäre enthaltenen Schadstoffe. Derartige Informationen gibt es zwar bereits jetzt, jedoch nur für besonders gefährdete Gebiete und in verhältnismäßig groben Abstufungen, was wahrscheinlich auf die zu geringe Wirksamkeit der bisher bekannten Bekämpfungsmaßnahmen zurückzuführen ist. Die Ermittlung des jeweils in der Atmosphäre vorhandenen Schadstoffgehaltes auch über größere Gebiete hin ist sicher mit der notwendigen Genauigkeit möglich. Entsprechend dem Ergebnis dieser Ermittlungen werden also erfindungsgemäß unter gleichzeitiger Berücksichtigung der in der Atmosphäre herrschenden Strömungsverhältnisse Wirkstoffe geeigneter Art mittels des ganzen Systems oder nur eines Teils desselben in der jeweils zweckmäßigen Menge in die Atmosphäre eingeleitet, um den schädlichen Auswirkungen zu begegnen.

Es ist jetzt also zumindest in den meisten Fällen nicht mehr notwendig, die in einer Rauchgas- oder Abgasströmung enthaltenen schädlichen Bestandteile unmittelbar am Ursprung bzw. an der jeweiligen Quelle zu bekämpfen, indem man beispielsweise Rauchgasentschwefelungsanlagen oder dergleichen vorsieht. Vielmehr finden jetzt die die schädliche Wirkung aufhebenden Reaktionen in der Atmosphäre statt. Die aufwendigen Filter- und Rauchgasentschwefelungsanlagen können somit ganz oder zumindest im wesentlichen entfallen. Dennoch lassen sich alle durch den "sauren Regen" und durch "trockene Ablagerungen" sowie auch durch saure Anlagerungen an Staub bisher verursachten schädlichen Auswirkungen vermeiden. Dies gilt auch in bezug auf saure Schadstoffe, die sich bisher beispielsweise an kulturhistorischen Bauwerken ablagerten und starke Schädigungen an diesen hervorriefen.

Auch ist es mit dem erfindungsgemäßen Verfahren möglich, der Ozonbildung entgegenzuwirken. Man kann geeignete Wirkstoffe in einer solchen Menge und räumlichen Verteilung in die Atmosphäre einleiten, daß reaktionsfähiger Sauerstoff, sei es vor oder nach einer Abspaltung, gebunden wird, bevor es zur Ozonbildung kommt.

Insbesondere Schwefeldioxid und Stickoxide sowie auch Fluor-Wasserstoff sind mit dissoziiertem Wasserstoff verknüpft, also mit freien Wasserstoff-Ionen, die in der Luft oder am Boden mit anderen Substanzen reagieren und schädlich wirken. Man wird also solche Substanzen als Wirkstoffe zu wählen haben - beispielsweise Alkalien mit OH-Ionen -, die den dissoziierten Wasserstoff binden und zusammen mit diesem unschädliche Substanzen bilden oder möglichst sogar nützliche Substanzen.

Es kann ferner gemäß einem weiteren Vorschlag der Erfindung angestrebt werden, den Anteil an Schadstoffen in der Atmosphäre dadurch herabzusetzen, daß die schädliche Wirkung bereits vor dem Erreichen der Atmosphäre zumindest im wesentlichen aufgehoben wird. Dies erreicht man dadurch, daß die Basenbildner den die Schadstoffe enthaltenden Gasströmungen vor ihrer Verteilung in der Atmosphäre beigegeben werden. Da es sich hierbei im wesentlichen um Schwefeldioxid und/oder Stickoxide handeln wird, werden Basenbildner beigegeben, die sogar bereits innerhalb des Schornsteins auf die genannten

Oxide einwirken.

Jedoch kann es für die im Rahmen des erfindungsgemäßen Systems verwendeten Schornsteine oder für die anderen Bauwerke mit Kaminfunktion auch vorteilhaft sein, wenn die Wirkstoffe der austretenden Gasströmung oberhalb der Mündung des jeweiligen Schornsteins oder Bauwerkes beigegeben werden. Auch hier ist die Gasströmung noch kompakt, so daß das Beigeben der Wirkstoffe nicht erschwert wird. Die vorgeschlagene Maßnahme bringt den Vorteil, daß eine eventuell schädliche Einwirkung der Wirkstoffe auf die Auskleidung des Schornsteins oder der Bauwerke nicht befürchtet zu werden braucht.

Es liegt ferner im Rahmen der Erfindung, Basenbildner auch mittels eines Abluft- oder Abgasstromes in die Atmosphäre einzuleiten, der zumindest angenähert frei von Schadstoffen ist. Insbesondere auch in der Nähe von oder in durch Säureemission gefährdeten Gebieten können zusätzliche Bauwerke mit Kaminfunktion errichtet werden, wenn sich die Beigabe der Basenbildner in der notwendigen Menge und Verteilung nicht durch bereits vorhandene Schornsteine, Kühltürme oder dergleichen gewährleisten läßt.

Wenn den aus einem Schornstein austretenden Rauchgasen bereits auf dem Weg in die Atmosphäre Basenbildner beigegeben werden, so wird man im allgemeinen die Basenbildner zumindest in einer Menge beigeben, die einem stöchiometrischen Verhältnis zu den im Rauchgas enthaltenen Schadstoffanteilen entspricht. Entsprechendes gilt auch für die Entsendung von Basenbildnern in die Atmosphäre, soweit der Schadstoffgehalt derselben bekannt ist. Erfindungsgemäß kann es jedoch vorteilhaft sein, daß die Beigabe der Basenbildner im Vergleich zu dem im Rauchgas oder der Atmosphäre enthaltenen Anteil von Schadstoffen in einem überstöchiometrischen Verhältnis erfolgt.

Bezieht man den überstöchiometrischen Anteil auf den im Rauchgas eines einzelnen Schornsteins enthaltenen Schadstoffanteil, so wird der in die Atmosphäre eingeleitete Überschußanteil an Basenbildnern die Wirkung der übrigen bereits in der Atmosphäre enthaltenen Schadstoffanteile aufheben. Bezieht man den überstöchiometrischen Anteil auf den in der jeweils untersuchten Atmosphäre enthaltenen Schadstoffanteil, so kann man durch eine überschüssige Beigabe der Tatsache Rechnung tragen, daß sich in der Praxis eine räumliche Verteilung der Basenbildner innerhalb des zu schützenden Gebietes nicht in einer perfekten Weise erreichen läßt. Es werden durch die überschüssige Beigabe die in der Atmosphäre enthaltenen Schadstoffe auf jeden Fall hinreichend unschädlich gemacht werden. Eine ausreichende Sicherheit ist hierbei also gewährleistet. Somit können dann auch Schadstoffe neutralisiert werden, die in nicht vorhersehbarer Weise aus ganz anderen geographischen Bereichen durch die in der Atmosphäre vorhandene Strömung zusätzlich in das jeweils zu schützende Gebiet transportiert werden. Der überstöchiometrische Anteil läßt sich in jedem Fall mit einer solchen Genauigkeit ermitteln, daß ein zu großer Überschuß an Basenbildnern vermieden wird.

Es ist bekannt, daß Säurebildner in geringer Konzentration als Düngemittel nützlich sind. Sie werden deshalb in der Landwirtschaft dem Boden besonders in Form von Schwefel- oder Stickstoffverbindungen als direkte Düngung zugefügt. Aber auch in diesem Fall müssen die Säurebildner neutralisiert werden, was im allgemeinen dadurch geschieht, daß man den Schwefel- und Stickstoffdünger bereits vor seiner Verteilung auf dem Erdboden Kalk oder Magnesium beifügt. Kalk und Magnesium sind als Neutralisierungsmittel für die Atmosphäre wegen ihrer Staubwirkung nicht besonders gut geeignet.

Man versucht ferner, den hohen Aufwand für Rauchgasentschwefelungsanlagen dadurch zu rechtfertigen, daß das in derartigen Anlagen anfallende Neutralisationsprodukt, beispielsweise Ammoniumsulfat, als Düngemittel verwendbar ist. Dies ist aber wegen starker Wasserlöslichkeit nicht in dem notwendigen Maße lagerfähig. Demgegenüber entsteht Ammoniumsulfat bei der Anwendung des erfindungsgemäßen Verfahrens im Bereich der Atmosphäre, wenn als Wirkstoff Ammoniak gewählt wird. Man erspart also eine kostspielige Herstellung dieses Düngemittels sowie seine verhältnismäßig kostspielige Verteilung am Erdboden durch die Land- und Forstwirtschaft. Wenn man im Rahmen der Erfindung Natronlauge als Neutralisierungsmittel wählt, entsteht in der Atmosphäre und am Boden Glaubersalz, welches ein guter Dünger z. B. auch für Fichten ist. Es können also durch das erfindungsgemäße Verfahren saure Düngemittel bereits in neutralisierter Form durch den Regen auf den Erdboden verteilt werden. Auch können sich trocken am Erdboden abgelagerte Säure- und Basenbildner dort selbst neutralisieren.

Somit läßt sich das von der Erfindung vorgeschlagene Verfahren gleichzeitig auch als ein Verfahren ansehen, mit dem die Düngung des Erdbodens wesentlich einfacher und wirtschaftlicher erfolgen kann. Der durch die Land- und Forstwirtschaft zu erbringende Aufwand ist entsprechend geringer.

Der in der Erfindung enthaltene grundsätzliche Gedanke ist also darin zu sehen, daß das Aufheben der von den Schadstoffen ausgehenden Wirkung in der Atmosphäre stattfindet, wobei gegebenenfalls der auf die Schadstoffe ausgeübte Einfluß bereits an dem Emissionsort beginnen kann. Während bei den bekannten Rauchgasentschwefelungsanlagen meist nur verhältnismäßig kurze Verweilzeiten zur Verfügung stehen, in denen Säurebildner und Basenbildner miteinander reagieren können, stehen im Rahmen des erfindungsgemäßen Verfahrens ausreichend lange Verweilzeiten zur Verfügung. Die Erfindung beinhaltet ferner ein Transportsystem, mit dem die Wirkstoffe unter

Ausnützung bereits vorhandener Schornsteine und hoher Bauwerke mit Kaminfunktion und mit Hilfe von in dem jeweils notwendigen Ausmaß zu errichtenden weiteren Bauwerken mit Kaminfunktion in einer wirtschaftlich vertretbaren und auch gut steuerbaren Weise an die Schadstoffe herangeführt werden können.

Zu den erzielbaren Vorteilen gehört im übrigen auch der jetzt mögliche systematische Schutz der Natur, insbesondere auch der Pflanzen, die bisher durch die Ozonbildung oder durch saure Bestandteile sehr stark in Mitleidenschaft gezogen werden.

Nachfolgend seien als Beispiel einige chemische Reaktionen angegeben, die bei der Neutralisierung der Säurebildner mit Hilfe der Basenbildner ablaufen, wobei jeweils die Mitwirkung der in der Atmosphäre enthaltenen Feuchtigkeit vorausgesetzt wird.

1. $NaOH + H_2SO_4 = Na_2SO_4 + H_2O$;
2. $NaOH + HNO_3 = NaNO_3 + H_2O$;
3. $NH_4OH + H_2SO_4 = (NH_4)2SO_4 + H_2O$;
4. $NH_4OH + HNO_3 = NH_4NO_3 + H_2O$.

Bei den jeweils auf der rechten Seite dieser Gleichungen entstehenden Salzen handelt es sich um Glaubersalz, Chilesalpeter, Ammoniumsulfat und Ammoniumnitrat, also um Substanzen, die auch Düngemittel sind.

Das nachfolgende Beispiel beschreibt die Neutralisation von Säurebildnern im Bereich einer Stadt, die in einem Tal liegt und viel Industrie hat. Für dieses Gebiet soll ein jährlicher Schwefelniederschlag von 21,3 Gramm Schwefel je Quadratmeter festgestellt worden sein. Hiervon sollen 1,3 Gramm Schwefel je Quadratmeter durch den sauren Regen verursacht worden sein und 20 Gramm Schwefel je Quadratmeter durch trockene Ablagerung. (Diese Gegebenheiten sind für einige Großstädte durchaus realistisch). Es soll angenommen werden, daß etwa 30 % dieser Säurebildner durch ohnehin in der Atmosphäre befindliche Basenbildner neutralisiert werden. Es sind dann noch 0,9 Gramm Schwefel je Quadratmeter, verursacht durch den sauren Regen und 14 Gramm Schwefel je Quadratmeter aufgrund trockener Ablagerung zu neutralisieren.

Die 0,9 Gramm Schwefel je Quadratmeter stammen von außerhalb und müssen durch überregionale Maßnahmen auch außerhalb dieses Gebietes neutralisiert werden. Von den 14 Gramm Schwefel je Quadratmeter sollen 4 Gramm Schwefel je Quadratmeter auf überregionale Emittenten entfallen, die ebenfalls überregional neutralisiert werden müssen.

Die restlichen 10 Gramm Schwefel je Quadratmeter und Jahr werden in dem betreffenden Gebiet selbst verursacht. Man kann ferner voraussetzen, daß der selbtverursachte Anteil an saurem Regen in diesem Gebiet mit Null zu bewerten ist. Es wird angenommen, daß das Gebiet 80 $km^2$ groß ist. Dann beträgt die in diesem Gebiet selbst zu neutralisierende Schwefelablagerung jährlich etwa 800 Tonnen. Wenn man Ammoniak als Neutralisierungsmittel verwendet, gilt für den Ablauf folgende Reaktionsgleichung:

$NH_2 + H_2O + H_2SO_4 = (NH_4)_2SO_4 + H_2O$.

Es ergibt sich für die Neutralisierung der am Boden abgelagerten Schwefelmenge von 10 Gramm je Quadratmeter eine erforderliche Ammoniakmenge von 850 Tonnen je Jahr, (auf 32 Gewichtsanteile Schwefel entfallen 34 Ammoniakanteile).

Die durchschnittliche Konzentration an Schwefeldioxid in Bodennähe soll in diesem Fall beispielsweise 75 Microgramm Schwefeldioxid je Kubikmeter betragen. Hiervon sollen beispielsweise 20 Microgramm Schwefeldioxid je Kubikmeter durch äußeren Einfluß verursacht werden, so daß der Eigenanteil dieses Gebietes 55 Microgramm Schwefeldioxid je Kubikmeter beträgt.

Die trockene Ablagerung ist etwa proportional der Schwefeldioxid-Konzentration in der bodennahen Luft.

Erfahrungsgemäß werden je 20 Microgramm durchschnittlicher Schwefeldioxidkonzentration je Kubikmeter jährlich etwa 1,8 Gramm Schwefel je Quadratmeter abgelagert. Auch hieraus ergibt sich eine selbstverursachte Jahresablagerung von 10 Gramm Schwefel je Quadratmeter, so daß sich die Emissions- und Ablagerungsbilanz auch bei diesem gewählten Beispiel mit angenommenen Werten schließt.

Statt durch Berechnungen wird jetzt anhand der tatsächlich vorliegenden Situation angenommen, daß 10 % des in diesem Gebiet emittierenden Schwefels auch in diesem Gebiet abgelagert werden. Damit beträgt die in die Atmosphäre einzuleitende Ammoniakmenge in diesem Gebiet 8500 Tonnen je Jahr. Diese Menge muß über diejenigen Kamine und kaminähnlichen Bauwerke in die Atmosphäre geleitet werden, die in Abhängigkeit von der Windrichtung, der thermischen Quellenergie und/oder der Kaminhöhe den Kaminen angepaßt sind, die die Säurebildner emittieren. Dann sind die Einwirkungsbereiche von Basenbildnern und Säurebildnern emissionsgleich. Soweit Basenbildnerkamine und Säurebildnerkamine identisch sind, ist diese Anpassung von Haus aus gegeben. Durch überstöchiometrische Basenbildnerzugabe läßt sich dann der Einfluß der Säurebildnerquelle korrigieren, denen man keine Basenbildner zugeben kann.

Der jährliche Mittelwert sagt jedoch nichts über kurzzeitige Zustände aus. Diese jeweils zutreffenden Maßnahmen müssen sich aber nach diesen augenblicklichen Zuständen richten.

Es sei in diesem Beispiel zur Abschätzung der meteorologischen Extremsituation angenommen, daß im ungünstigsten Fall an einem Tag die Ablagerung an Säurebildnern etwa 1,5 % der jährlichen Ablagerung betragen kann. Dieser Wert stimmt aber nicht mit der als Durchschnitt angenommenen Ablagerung von 10 % der Schwefelemissionen dieses Gebietes überein.

Der Wert von 1,5 % für eine Ablagerung an Säurebildnern an einem ungünstigen Tag würde

einer selbstverursachten maximalen ganztägigen Belastung an Schwefeldioxid von 300 Microgramm Schwefeldioxid je Kubikmeter entsprechen, was für eine Inversionswetterlage ein realistischer Wert ist. Hieraus ergibt sich eine höchste Tagesablagerung von 11,5 Tonnen Schwefel in diesem Gebiet. Diese Ablagerung verursacht einen Ammoniakbedarf von 10,5 Tonnen. Es muß für jede Situation mit Hilfe metereologischer Beobachtung und Berechnung derjenige Prozentsatz ermittelt werden, der dem Verhältnis des sich in diesem Gebiet ablagernden Schwefels zu dem insgesamt emittierten Schwefel entspricht. Dieser Wert soll in diesem Fall beispielsweise mit 25 % geschätzt werden, was beim Vorhandensein einer Vielzahl kleiner Emittenten durchaus ein realistischer Wert für eine Inversionssituation ist. Somit ergibt sich ein Ammoniakbedarf von 46 Tonnen für die Neutralisierung des insgesamt ermittelten Schwefelanteils.

Dieser Bedarf ist im übrigen doppelt so hoch wie der aus dem Jahresdurchschnitt ermittelte Tagesbedarf, da bei solch einer Wetterlage in der kalten Jahreszeit durchaus mit der doppelten Säurebildneremission gerechnet werden muß (8500 : 465 = 23; 23 x 2 = 46).

Soweit Basenbildner unmittelbar zusammen mit den Säurebildnern aus denselben Schornsteinen in die Atmosphäre eingeleitet werden können, brauchen Maßnahmen zur Anpassung an die jeweilige Wettersituation nicht getroffen zu werden, sondern nur an die eigene Säurebildneremission. Dies dürfte aber eher eine Ausnahme sein, denn im allgemeinen ist mit dem Vorhandensein zahlreicher Quellen von jeweils geringer Emission zu rechnen, bei denen man keine Basenbildner zugeben kann und die sogar in besonders starkem Maße örtliche Ablagerungen verursachen. Eine derartige Situation ist dann der Ausgangspunkt für die räumliche Verteilung unter Berücksichtigung der jeweils häufigsten Wettersituationen und für die Dimensionierung der zusätzlich zu errichtenden kaminähnlichen Bauwerke. Weil es bekannt ist, daß Inversionswetterlagen beispielsweise stets bei Ostwinden auftreten, wird man die zusätzlichen kaminähnlichen Bauwerke östlich des jeweils zu schützenden Gebietes errichten. Auch können natürlich bei den dort bereits vorhandenen Kaminen die Basenbildner in einem überstöchiometrischen Verhältnis in die Atmosphäre eingeleitet werden.

Dieses Beispiel macht deutlich, auf welche Weise mit Hilfe von Berechnungen, durch ständige Kontrolle der meteorologischen Verhältnisse und mit statistischen Ermittlungen die in der Atmosphäre befindlichen Schadstoffe neutralisiert werden können und daß das vorgeschlagene System mit den vielen Möglichkeiten eine gute Anpaßbarkeit an unterschiedliche Situationen gewährleistet.

Dies flexible System ist aber auch erforderlich, weil bei reiner stöchiometrischer Basenbildnerzugabe bei Säurebildnern und Quellen stellenweise in der Atmosphäre alkalische Verhältnisse entstehen würden, die möglicherweise ungünstiger sind als saure Verhältnisse.

## Patentansprüche

1. Verfahren zur Herabsetzung der schädlichen Wirkung der in der Atmosphäre enthaltenen säurebildenden Schadstoffe wie $SO_2$ und $NO_x$ unter Mitwirkung der in der Atmosphäre enthaltenen Feuchtigkeit durch systematische und weiträumige Einbringung und Verteilung von stark wasserlöslichen, nicht staubbildenden Basenbildnern wie Ammoniak-, Kalium- und Natriumverbindungen in die Atmosphäre über ein System von überregional angeordneten Schornsteinen und/oder Bauwerken zur Herbeiführung in etwa gleicher Einwirkungsbereiche der Säure und Basenbildner in den Luftschichten.

2. Verfahren nach Anspruch 1, dadurch gekennzeichnet, daß die Basenbildner den die Schadstoffe enthaltenden Gasströmungen vor ihrer Verteilung in der Atmosphäre beigegeben werden.

3. Verfahren nach Anspruch 1 oder 2, dadurch gekennzeichnet, daß die Basenbildner auch in eine solche Abluft- oder Abgasströmung eingebracht werden, die zumindest angenähert frei von Schadstoffen ist.

4. Verfahren nach Anspruch 1 oder 2, dadurch gekennzeichnet, daß die Basenbildner mit dem Brennstoff, mit der Verbrennungsluft oder direkt in den Rauchgasstrom von Feuerungsanlagen eingebracht und mittels des Rauchgasstromes in die Atmosphäre eingeleitet werden.

5. Verfahren nach einem der vorherigen Ansprüche, dadurch gekennzeichnet, daß die Basenbildner der aus einem Schornstein oder Bauwerk mit Kaminfunktion austretenden Gasströmung oberhalb der Mündung beigegeben werden.

6. Verfahren nach einem der vorherigen Ansprüche, dadurch gekennzeichnet, daß die Beigabe der Basenbildner im Vergleich zu dem im Rauchgas oder der Atmosphäre enthaltenen Anteil an Schadstoffen in einem überstöchiometrischen Verhältnis erfolgt.

## Claims

1. Method for reducing the damaging action of acid-forming pollutants contained in the atmosphere, such as $SO_2$ and $NO_x$, using the moisture contained in the atmosphere, by systematic and extensive ihtroduction and distribution of strongly water-soluble non-dust-forming basifiers, such as ammonia, potassium and sodium compounds, into the atmosphere via a system of nationally arranged chimneys and/or

structures for bringing, in approximately the same areas of action, the acid and basifiers into the air layers.

2. Method according to claim 1, characterised in that the basifiers are added to the gas flows containing the pollutants before their distribution into the atmosphere.

3. Method according to claim 1 or 2, characterised in that the basifiers are introduced also into an exhaust air or gas flow that is at least approximately free of pollutants.

4. Method according to claim 1 or 2, characterised in that the basifiers are introduced with the fuel, with the combustion air or directly into the waste gas flow of furnaces and are introduced into the atmosphere by means of the waste gas flow.

5. Method according to one of the preceding claims, characterised in that the basifiers are added above the opening to the gas flow emerging from a chimney or structure having the function of a chimney.

6. Method according to one of the preceding claims, characterised in that, compared with the proportion of pollutants contained in the waste gas or the atmosphere, the basifiers are added in a ratio greater than the stoichiometric ratio.

**Revendications**

1. Procédé pour la réduction de l'action nuisible des éléments polluants formant des acides et se trouvant dans l'atmosphère, tels que $SO_2$ et $NO_x$, par action conjointe de l'humidité contenue dans l'atmosphère, par l'amenée systématique et à longue distance et la distribution dans l'atmosphère de formateurs de bases très solubles et ne formant pas de poussière, tels que des composés d'ammoniac, de potassium et de sodium, par un système de cheminées et/ou de bâtiments super-régionaux pour amener dans les couches d'air les acides et les formateurs de base dans des zones d'action sensiblement identiques.

2. Procédé selon la revendication 1, caractérisé par le fait que les formateurs de bases sont ajoutés aux courants de gaz contenant les éléments polluants avant leur distribution dans l'atmosphère.

3. Procédé selon la revendication 1 ou 2, caractérisé par le fait qu'on introduit les formateurs de bases également au moyen d'un courant d'air d'évacuation ou de gaz d'échappement qui est au moins pratiquement exempt d'éléments polluants.

4. Procédé selon la revendication 1 ou 2, caractérisé par le fait que les formateurs de bases sont amenés avec le combustible, avec l'air de combustion ou directement dans le courant de gaz de fumée et sont introduits dans l'atmosphère au moyen du courant de gaz de fumée.

5. Procédé selon l'une des revendications précédentes, caractérisé par le fait que les formateurs de bases sont ajoutés au courant de gaz de fumée sortant d'une cheminée ou d'un bâtiment avec une fonction de cheminée au-dessus de l'orifice.

6. Procédé selon l'une des revendications précédentes, caractérisé par le fait que l'amenée des formateurs de base est effectuée à un rapport surstochiométrique par rapport à la portion d'éléments polluants contenus dans le gaz de fumée ou l'atmosphère.